# EUROPÄISCHE PATENTSCHRIFT

(11) **EP 0 505 759 B1**
(45) Veröffentlichungstag und Bekanntmachung des Hinweises auf die Patenterteilung: **02.01.1997**
(21) Anmeldenummer: 92103377.5
(22) Anmeldetag: 27.02.1992
(51) Int. Cl.: B32B 5/18, B32B 1/08, F16L 59/02

(54) **Isoliermaterial für Rohrleitungen**
Isolation material for pipe conduits
Matériau isolant pour tuyauterie

(30) Priorität: 27.03.1991 DE 4110124
(43) Veröffentlichungstag der Anmeldung: 30.09.1992
(73) Patentinhaber: E. Missel GmbH, D-70374 Stuttgart (DE)
(72) Erfinder: Schäfer, Wolfgang, W-7000 Stuttgart 50 (DE)
(74) Vertreter: Dipl.-Phys.Dr. Manitz Dipl.-Ing. Finsterwald Dipl.-Ing. Grämkow Dipl.-Chem Dr. Heyn Dipl.Phys. Rotermund Morgan, B.Sc.(Phys)

(56) Entgegenhaltungen:
- EP-A- 0 176 721
- EP-A- 0 206 910
- DE-A- 3 104 835
- DE-A- 3 211 764
- DE-A- 4 103 426
- FR-A- 2 383 782
- GB-A- 1 310 508
- GB-A- 1 340 250
- US-A- 4 077 821

## Beschreibung

Die Erfindung betrifft ein Isoliermaterial für Rohrleitungen, bestehend aus einer mechanisch stabilen und feuchtigkeitsundurchlässigen Außenschicht, die mit einer Schaumstoffschicht zu einem schlauchförmigen Verbund zusammengefaßt ist.

Mit derartigen Isoliermaterialien werden beispielsweise Abwasserrohre ummantelt. Auf diese Weise kann durch Absorption der im Abwasserrohr entstehenden Geräusche durch das Isoliermaterial bis zu einem gewissen Maß eine Verringerung der nach außen hörbaren und somit störenden Geräusche erreicht werden.

Aus der EP-A3-0 176 721 ist ein Isoliermaterial bekannt, das Rohr- oder Plattenform besitzen kann und aus mindestens einer Faserschicht und mindestens einer feuchtigkeitsundurchlässigen Schicht besteht und einen Verbund bildet, der sowohl hohe Festigkeit als auch Isoliereigenschaften aufweist. Hierbei kann als feuchtigkeitsundurchlässige Schicht eine Schicht aus geschlossenzelligem Schaumstoff Verwendung finden.

Aus der DE-A1-32 11 764 ist ein Flächenverbundmaterial für Isolationszwecke bekannt, das aus mehreren miteinander verbundenen Materialschichten besteht. Das Flächenverbundmaterial ist bei einseitiger Beschichtung aus mindestens zwei Schichten aufgebaut. Hierbei wird vorgeschlagen, auf eine relativ starke Flächenmaterialschicht eines Weichschaumstoffes eine Schicht aus Asbestpapier aufzukleben, wobei auf dem Asbestpapier selbst nach außen hin eine Aluminiumfolie aufgebracht ist.

Die Aufgabe der vorliegenden Erfindung besteht darin, ein Isoliermaterial zu schaffen, mit dem ein möglichst guter Schalldämmeffekt erzielbar ist.

Erfindungsgemäß wird dies dadurch erreicht, daß die geschlossenzellige Schaumstoffschicht eine geringe Dichte und an deren Innenmantelfläche Hervorhebungen und Vertiefungen aufweist.

Vorzugsweise werden diese Hervorhebungen und Vertiefungen durch sich axial erstreckende Rillen gebildet, wobei jedoch beliebige Ausbildungsformen der Hervorhebungen und Vertiefungen denkbar sind.

Mit einem derartigen Isoliermaterial durchgeführte Tests ergaben im Vergleich zu herkömmlichen Isoliermaterialien deutlich verbesserte Schalldämmeigenschaften.

Die erfindungsgemäß beispielsweise mit einem Rillenprofil versehene, geschlossenzellige Schaumstoffschicht besteht vorzugsweise aus einem großzelligen und nachgiebigen bzw. weichen Schaumstoff mit geringer Dichte.

Vorzugsweise wird zwischen der Außenschicht und der Schaumstoffschicht eine Faserschicht angordnet.

Die Schaumstoffschicht kann sowohl einseitig als auch beidseitig mit einem Rillenprofil versehen sein.

Bei einseitigem Rillenprofil befinden sich die Rillen auf derjenigen Seite der Schaumstoffschicht, auf welcher der zu dämmende Schall erzeugt wird. Die andere Seite der Schaumstoffschicht ist glatt ausgebildet. Hierdurch wird ein guter Kontakt zu der angrenzenden Außenschicht bzw. Faserschicht gewährleistet, was eine stabile und dauerhafte Verbindung der jeweiligen Schichten ermöglicht.

Bei beidseitigem Rillenprofil ist die Rillentiefe vorzugsweise auf der Schallseite größer ausgebildet als auf der mit der Außen- bzw. Faserschicht verbundenen Seite der Schaumstoffschicht.

Die Rillentiefe auf der Schallseite beträgt vorzugsweise ungefähr die Hälfte der Gesamtdicke der Schaumstoffschicht, wobei die Rillenbreite ungefähr gleich der Rillentiefe ist.

Die Schaumstoffschicht besitzt beispielsweise ein spezifisches Gewicht von 20 kg/m³. Die Gesamtdicke der Schaumstoffschicht kann beispielsweise 7 mm betragen.

Die gemäß einer vorteilhaften Ausführungsform der Erfindung mit der Schaumstoffschicht fest verbundene Faserschicht ist vorzugsweise durch ein Vlies gebildet. Besonders gute Dämmeigenschaften lassen sich dann erzielen, wenn die Faserschicht eine geringe Dichte und einen vergleichsweise hohen Luftanteil aufweist.

Die Dicke der Faserschicht kann beispielsweise zwischen 1 und 2 mm liegen, vorzugsweise beträgt sie zwischen einem Drittel und einem Siebtel der Gesamtdicke der Schaumstoffschicht.

Bei einer bevorzugten Ausführungsform der Erfindung wird die Faserschicht mittels eines polyethylenhaltigen Klebstoffes auf die Schaumstoffschicht aufkaschiert. Die Faserschicht ist ihrerseits wiederum mit ihrer der Schaumstoffschicht abgewandten Seite auf eine feuchtigkeitsundurchlässige Außenschicht aufkaschiert. Die Außenschicht wird beispielsweise durch eine Kunststoff-Folie gebildet, die eine Beschädigung des Isoliermaterials verhindert, was besonders bei Einsatz des Isoliermaterials auf Baustellen von Bedeutung ist.

Vorzugsweise wird die Außenschicht mit einer integrierten oder aufkaschierten Netzstruktur versehen, um so evtl. auftretende Risse in der Außenschicht auf kleinflächige Bereiche begrenzen zu können und damit die Gesamtreißfestigkeit zu erhöhen.

Ein Vorteil des erfindungsgemäßen Isoliermaterials liegt darin, daß es als flächiges Schichtmaterial hergestellt werden kann. Anschließend kann das Schichtmaterial dann zu einem Dämmschlauch zur Verwendung bei Abwasser- oder Fallrohren geformt werden.

Hierbei wird das flächige Isoliermaterial zu einem zylinderförmigen Dämmschlauch geformt, wobei die zwischen den Rillen der Schaumstoffschicht befindlichen Hervorhebungen in Richtung der Schlauchachse weisen. Vorzugsweise wird das Isoliermaterial in der Weise zu einem Schlauch geformt, daß die zwischen den Hervorhebungen befindlichen Rillen nicht vollständig geschlossen sind, d. h. es befindet sich weiterhin Luft zwischen den einzelnen sich in Längsrichtung des Schlauchinnenumfangs erstreckenden Hervorhebungen.

Ein weiterer Vorteil eines erfindungsgemäßen Isoliermaterials liegt darin, daß die Zellengröße des Schaumstoffmaterials beim Verformen des flächig hergestellten Isoliermaterials zu einem schlauchförmigen Gebilde zumindest in den zwischen den Rillen befindlichen Hervorhebungen nicht verändert, insbesondere nicht verkleinert wird. Dies ist von Bedeutung, da die Zellengröße des Schaumstoffmaterials Einfluß auf dessen Dämmeigenschaften hat und infolgedessen beispielsweise durch ein Zusammenpressen des Schaumstoffmaterials in bestimmten Bereichen nicht unkontrolliert verändert werden soll.

Bei Anbringung des erfindungsgemäßen Isoliermaterials an Rohren ist es von Vorteil, wenn der Dämmschlauch nicht gegen das Rohr gedrückt wird, sondern nur relativ lose um das Rohr gehalten wird. Auf diese Weise lassen sich die Schalldämmeigenschaften des erfindungsgemäßen Materials weiter verbessern.

Die Erfindung wird im folgenden an Hand der Zeichnung beschrieben; es zeigt:
- Fig. 1: einen Schnitt durch ein flächig hergestelltes erfindungsgemäßes Isoliermaterial
- Fig. 2: einen Schnitt durch ein zu einem Dämmschlauch geformten erfindungsgemäßen Isoliermaterial.

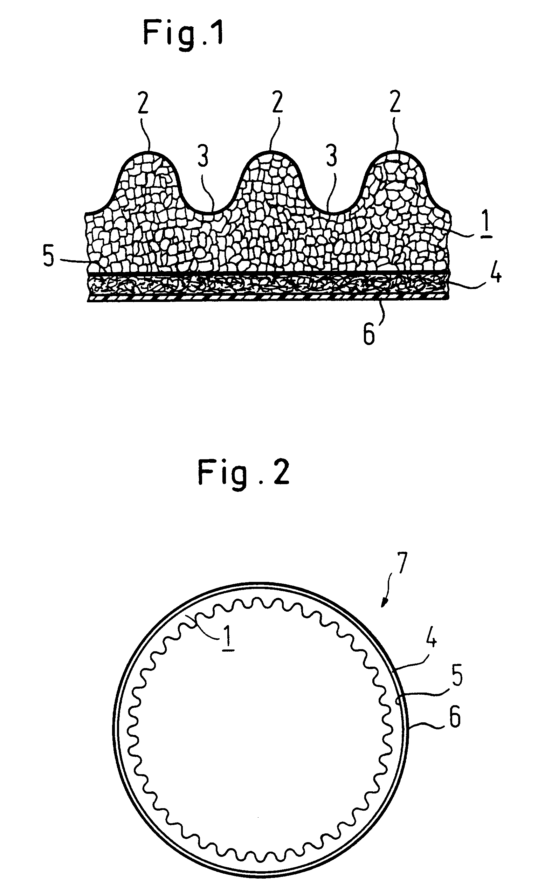

Fig. 1 zeigt eine großzellige Schaumstoffschicht 1, die auf einer Seite ein durch Hervorhebungen 2 und Rillen 3 gebildetes Rillenprofil aufweist. Die Schaumstoffschicht 1 ist bei 5 vollflächig und fest mit einer Faserschicht 4 verbunden. Diese Faserschicht 4 wiederum ist mit ihrem der Schaumstoffschicht 1 abgewandten Seite auf eine feuchtigkeitsundurchlässige Kunststoff-Folie 6 aufkaschiert.

Durch diesen Schichtaufbau ergibt sich insbesondere in schalltechnischer Hinsicht ein überraschend vorteilhafter Effekt, der zumindest im wesentlichen bedingt ist durch die Kombination unterschiedlicher Luftzellengrößen und der unterschiedlichen Elastizitäten der diese Zellen begrenzenden Wände der ausgewählten Materialien.

Fig. 2 zeigt ein zu einem Dämmschlauch 7 geformtes erfindungsgemäßes Isoliermaterial gemäß Fig. 1.
Wesentlich ist dabei, daß sich über die Erhebungen bzw. Vorsprünge mit dem jeweils zu dämmenden Rohr nur ein punkt- oder im wesentlichen linien- bzw. streifenförmiger Kontakt ergibt und die Vorsprünge bzw. Hervorhebungen trotz der gekrümmten Gestalt der Dämmung ihren Einzelcharakter beibehalten.

## Patentansprüche

1. Isoliermaterial für Rohrleitungen, bestehend aus einer mechanisch stabilen und feuchtigkeitsundurchlässigen Außenschicht (6), die mit einer Schaumstoffschicht (1) zu einem schlauchförmigen Verbund (7) zusammengefaßt ist,
dadurch **gekennzeichnet,**
daß insbesondere zum Zweck der Schalldämmung die geschlossenzellige Schaumstoffschicht (1) eine geringe Dichte und an deren Innenmantelfläche Hervorhebungen (2) und Vertiefungen (3) aufweist.

2. Isoliermaterial nach Anspruch 1,
dadurch **gekennzeichnet,**
daß die Außenschicht (6) eine integrierte oder aufkaschierte Netzstruktur aufweist, und daß zwischen der Außenschicht (6) und der Schaumstoffschicht (1) vorzugsweise eine Faserschicht (4) angeordnet ist.

3. Isoliermaterial nach Anspruch 1 oder 2,
dadurch **gekennzeichnet,**
daß die Innenmantelfläche der Schaumstoffschicht (1) langgestreckte Hervorhebungen (2) und Vertiefungen (3) aufweist und daß sich die langgestreckten Hervorhebungen (2) und Vertiefungen (3) in Form eines Rillenprofils bevorzugt in Achsrichtung des schlauchförmigen Verbunds (7) erstrecken.

4. Isoliermaterial nach einem der Ansprüche 1 bis 3,
dadurch **gekennzeichnet,**
daß die Hervorhebungen und Vertiefungen eine Noppenstruktur und/oder eine Gitterstruktur bilden.

5. Isoliermaterial nach einem der vorhergehenden Ansprüche,
dadurch **gekennzeichnet,**
daß die Schaumstoffschicht (1) vorzugsweise ein spezifisches Gewicht von 20 kg/m³ besitzt und die Gesamtdicke der Schaumstoffschicht (1) ungefähr 7 mm beträgt, wobei das für die Schaumstoffschicht (1) verwendete Schaumstoffmaterial nachgiebig ist.

6. Isoliermaterial nach Anspruch 5,
dadurch **gekennzeichnet,**
daß die Rillentiefe ungefähr die Hälfte der Gesamtdicke der Schaumstoffschicht (1) beträgt und daß die Rillenbreite vorzugsweise ungefähr gleich der Rillentiefe ist.

7. Isoliermaterial nach einem der vorhergehenden Ansprüche,
dadurch **gekennzeichnet,**
daß die Schaumstoffschicht (1) an ihrem mit der Außenschicht (6) bzw. der Faserschicht (4) verbundenen Außenumfang glatt ausgebildet ist.

8. Isolierschicht nach einem der Ansprüche 1 bis 7,
dadurch **gekennzeichnet,**
daß die Schaumstoffschicht auf beiden Seiten Hervorhebungen und Vertiefungen aufweist und daß die Vertiefungen auf der der Außenschicht bzw. der Faserschicht zugewandten Seite geringer als die Vertiefungen auf der der Außenschicht bzw. der Faserschicht abgewandten Seite sind.

9. Isoliermaterial nach einem der vorhergehenden Ansprüche,
dadurch **gekennzeichnet,**
daß die Außenschicht (6) bzw. die Faserschicht (4) mittels eines polyethylenhaltigen Klebstoffes auf die Schaumstoffschicht (1) aufkaschiert ist.

10. Isoliermaterial nach einem der Ansprüche 3 bis 9,
dadurch **gekennzeichnet,**
daß die Gesamtdicke der Schaumstoffschicht (1) das drei- bis siebenfache der Dicke der Faserschicht (4) beträgt und die Faserschicht (4) vorzugsweise eine Dicke von 1 mm bis 2 mm aufweist.

## Claims

1. Insulating material for pipe conduits, comprising a mechanically stable outer layer (6) impermeable to moisture, which is combined with a foam layer (1) to form a hose-like composite structure (7), characterised in that, for the purpose of acoustic insulation in particular, the closed-cell foam layer (1) has a low density and raised portions (2) and recesses (3) at its inner jacket surface.

2. Insulating material in accordance with claim 1, characterised in that the outer layer (6) has an integrated net structure or a net structure laminated thereon, and in that a fibre layer (4) is preferably arranged between the outer layer (6) and the foam layer (1).

3. Insulating material in accordance with claim 1 or claim 2, characterised in that the inner jacket surface of the foam layer (1) has elongate, raised portions (2) and recesses (3) and in that the elongate, raised portions (2) and recesses (3) in the form of a groove profile preferably extend in the axial direction of the hose-like composite structure (7).

4. Insulating material in accordance with one of the claims 1 to 3, characterised in that the raised portions and recesses form a knob-like structure and/or a grid structure.

5. Insulating material in accordance with one of the preceding claims, characterised in that the foam layer (1) preferably has a specific weight of 20 kg/m³ and the total thickness of the foam layer (1) amounts to approximately 7 mm, with the foam used for the foam layer (1) being yielding.

6. Insulating material in accordance with claim 5, characterised in that the groove depth amounts to approximately half the total thickness of the foam layer (1) and in that the groove width is preferably approximately the same as the groove depth.

7. Insulating material in accordance with one of the preceding claims, characterised in that the foam layer (1) is made smooth at its outer periphery connected to the outer layer (6) and/or to the fibre layer (4).

8. Insulating layer in accordance with one of the claims 1 to 17, characterised in that the foam layer has raised portions and recesses on both sides and in that the recesses at the side adjacent the outer layer or the fibre layer are smaller than the recesses at the side remote from the outer layer or the fibre layer.

9. Insulating material in accordance with one of the preceding claims, characterised in that the outer layer (6) or the fibre layer (4) is laminated onto the foam layer (1) by means of an adhesive containing polyethylene.

10. Insulating material in accordance with one of the claims 3 to 9, characterised in that the total thickness of the foam layer (1) amounts to three to seven times the thickness of the fibre layer (4) and the fibre layer (4) preferably has a thickness of 1 mm to 2 mm.

## Revendications

1. Matériau isolant pour tuyauteries, se composant d'une couche extérieure (6) stable mécaniquement et imperméable à l'humidité, qui est assemblée à une couche de matériau alvéolaire (1) pour une jonction (7) tubulaire , caractérisé par le fait qu'en particulier dans le but de l'insonorisation, la couche de matériau alvéolaire (1) à cellules fermées présente une faible épaisseur et sur la surface d'enveloppe interne de celle-ci des saillies (2) et des creux (3).

2. Matériau isolant selon la revendication 1, caractérisé par le fait que la couche extérieure (6) comporte une structure réticulée intégrée ou contrecollée, et qu'entre la couche extérieure (6) et la couche de matériau alvéolaire (1) est disposée de préférence une couche de fibres (4).

3. Matériau isolant selon la revendication 1 ou 2, caractérisé par le fait que la surface d'enveloppe interne de la couche de matériau alvéolaire (1) présente des saillies (2) et des creux (3) longitudinaux et que les saillies (2) et creux (3) longitudinaux s'étendent sous forme d'un profil de rainures, de préférence dans la direction de l'axe de la jonction (7) tubulaire .

4. Matériau isolant selon l'une des revendications 1 à 3, caractérisé par le fait que les saillies et les creux forment une structure de boutons et/ou une structure réticulaire.

5. Matériau isolant selon l'une des revendications précédentes, caractérisé par le fait que la couche de matériau alvéolaire (1) a de préférence une masse volumique de 20 kg/m3 et que l'épaisseur totale de la couche de matériau alvéolaire (1) s'élève sensiblement à 7 mm, le matériau alvéolaire utilisé pour la couche de matériau alvéolaire (1) étant flexible.

6. Matériau isolant selon la revendication 5, caractérisé par le fait que la profondeur des rainures s'élève sensiblement à la moitié de l'épaisseur totale de la couche de matériau alvéolaire (1) et que la largeur des rainures est de préférence sensiblement égale à la profondeur des rainures.

7. Matériau isolant selon l'une des revendications précédentes, caractérisé par le fait que la couche de matériau alvéolaire (1) est réalisée lisse sur sa périphérie extérieure liée à la couche extérieure (6) ou à la couche de fibres (4).

8. Couche isolante selon l'une des revendications 1 à 7, caractérisée par le fait que la couche de matériau alvéolaire présente sur ses deux faces des saillies et des creux et que les creux sur la face tournée vers la couche extérieure ou la couche de fibres sont plus petits que les creux sur la face éloignée de la couche extérieure ou de la couche de fibres.

9. Matériau isolant selon l'une des revendications précédentes, caractérisé par le fait que la couche extérieure (6) ou la couche de fibres (4) est contrecollée sur la couche de matériau alvéolaire (1) au moyen d'une colle contenant du polyéthylène.

10. Matériau isolant selon l'une des revendications 3 à 9, caractérisé par le fait que l'épaisseur totale de la couche de matériau alvéolaire (1) est de trois à sept fois l'épaisseur de la couche de fibres (4) et que la couche de fibres (4) présente de préférence une épaisseur de 1 mm à 2 mm.
